# EUROPÄISCHE PATENTSCHRIFT

(11) **EP 2 548 930 B1**
(45) Veröffentlichungstag und Bekanntmachung des Hinweises auf die Patenterteilung: **01.07.2015**
(21) Anmeldenummer: 11006030.8
(22) Anmeldetag: 22.07.2011
(51) Int. Cl.: C09D 167/02

(54) **Wärmehärtbares Beschichtungssystem, Verfahren zu dessen Herstellung sowie dessen Anwendung**
Thermosetting coating system, method for its manufacture and application of same
Système de revêtement durcissable à la chaleur, son procédé de fabrication et d'application

(43) Veröffentlichungstag der Anmeldung: 23.01.2013
(73) Patentinhaber: EMS-Patent AG, 7013 Domat/Ems (CH)
(72) Erfinder: Van Liempt, Harrie, Dipl.-Ing., 7402 Bonaduz (CH); Kinkelin, Eberhard, Dr. rer. nat., 7000 Chur (CH); Pössnecker, Gerhard, Dr. rer. nat., 7062 Passugg-Araschgen (CH); Hoppe, Ralf, Dr. rer. nat., 7000 Chur (CH)
(74) Vertreter: Pfenning, Meinig & Partner GbR

(56) Entgegenhaltungen:
- EP-A2- 0 649 890
- EP-A2- 0 698 645
- US-B1- 6 184 311

## Beschreibung

Die vorliegende Erfindung betrifft ein wärmehärtbares Beschichtungssystem auf Grundlage von Polyestern und/oder Copolyestern. Das wärmehärtbare Beschichtungssystem zeichnet sich dadurch aus, dass ein spezieller zusätzlicher Copolyester, der von einem gegebenenfalls in der Zusammensetzung enthaltenen Copolyester verschieden ist, mit einem Schmelzpunkt von 80 bis 150 °C enthalten ist. Ferner betrifft die vorliegende Erfindung ein Verfahren zur Herstellung eines erfindungsgemäßen Beschichtungssystems, ein Verfahren zur Herstellung einer Schutzschicht aus einem erfindungsgemäßen Beschichtungssystem sowie eine entsprechend hergestellte Schutzschicht.

Wärmehärtbare Beschichtungssysteme auf Grundlage von Copolyestern sind bereits aus dem Stand der Technik bekannt. Diese werden üblicherweise auch als Pulverlacke bezeichnet und dienen zumeist der Beschichtung von beispielsweise Blechen, indem eine pulverförmige Zusammensetzung dieses Beschichtungssystem auf der Oberfläche des zu beschichteten Objekts aufgebracht und thermisch ausgehärtet wird. Wärmehärtbare Beschichtungssysteme enthalten dabei in der Regel mindestens ein Bindemittel sowie mindestens einen Vernetzer.

Beispielhafte Beschichtungssysteme sind aus der EP 0 664 325, EP 0 649 890 sowie der EP 0 698 645 bekannt.

Die US 6,184,311 betrifft eine Pulverlackzusammensetzung basierend auf einer Mischung aus semikristallinen und amorphen Polyestern.

Allerdings weisen derartige Beschichtungssysteme hinsichtlich der Beständigkeit der mechanischen Eigenschaften der Beschichtung über die Zeit nach wie vor Mängel auf. Aufgabe der vorliegenden Erfindung ist es daher, ein wärmehärtbares Beschichtungssystem anzugeben, aus dem sich eine Beschichtung herstellen lässt, die verbesserte mechanische Eigenschaften über die Zeit aufweist.

Diese Aufgabe wird hinsichtlich eines wärmehärtbaren Beschichtungssystems mit den Merkmalen des Patentanspruchs 1, hinsichtlich eines Verfahrens zur Herstellung eines Beschichtungssystems mit den Merkmalen des Patentanspruchs 9, bezüglich eines Verfahrens zur Herstellung einer Schutzschicht aus dem erfindungsgemäßen Beschichtungssystem mit den Merkmalen des Patentanspruchs 10 sowie bezüglich einer Schutzschicht mit den Merkmalen des Patentanspruchs 11 gelöst. Erfindungsgemäß wird somit ein wärmehärtbares Beschichtungssystem angegeben, das zumindest die folgenden vier Bestandteile enthält:
a) ein Bindemittel, wobei das Bindemittel mindestens einen Polyester und/oder einen Copolyester um fasst,
b) mindestens einen Vernetzer,
c) mindestens einen Copolyester, sowie gegebenenfalls
d) mindestens ein Additiv.

Für den Fall, dass das unter Merkmal a) genannte Bindemittel einen Copolyester enthält oder hieraus besteht, ist der unter Merkmal c) aufgeführte Copolyester seiner chemischen Natur nach von diesem Copolyester verschieden.

Alternativ hierzu kann das wärmehärtbare Beschichtungssystem auch aus den zuvor genannten vier Komponenten bestehen.

Die Zugabe des Copolyesters c) entfaltet seine positive Wirkung in allen Beschichtungssystemen, z.B. 95 zu 5, 93 zu 7 (Gewichtsverhältnis Bindemittel zu Härter) oder Hybridsystemen (Polyester als Bindemittel und Epoxid als Härter).

Erfindungsgemäß erfüllt der Copolyester c) die nachfolgend genannten Bedingungen:
a) einen Schmelzpunkt von 100 bis 130 °C, bevorzugt 110 bis 120 °C gemessen nach ISO 11357,
b) eine Glasübergangstemperatur von -40 bis 10 °C, bevorzugt -30 bis 0 °C, besonders bevorzugt -20 bis -10 °C, ganz besonders bevorzugt -15 bis - 10 °C, gemessen nach ISO 11357,
c) eine Schmelzviskosität von 200 bis 400 Pa·s, bevorzugt 250 bis 350 Pa·s, besondes bevorzugt 280 bis 320 Pa·s, gemessen bei 160 °C und 2,16 kg nach ISO 1133, und
d) eine Shorehärte D von 20 bis 45, bevorzugt von 20 bis 40, besonders bevorzugt von 25 bis 35, gemessen nach ISO 868.

Mit den zuvor beschriebenen Copolyestern als Komponente c) können besonders widerstandsfähige Schutzschichten durch Aushärtung des erfindungsgemäßen Beschichtungssystems erhalten werden.

Weiter ist vorteilhaft, wenn, bezogen auf die Gesamtzusammensetzung, der mindestens eine Copolyester c) zu 0,1 bis 13 Gew.-%, bevorzugt zu 0,5 bis 11 Gew.-%, besonders bevorzugt 1 bis 9 Gew.-%, ganz besonders bevorzugt 2 bis 7 Gew.-% enthalten ist.

Der erfindungsgemäße als Komponente c) eingesetzte Copolyester stellt dabei ein Polykondensat mindestens zweier Dicarbonsäuren und mindestens eines Diols dar, wobei, bezogen auf die Gesamtheit aller Dicarbonsäuren, 30 bis 65 mol-% Terephthalsäure sind und, bezogen auf die Gesamtheit aller Diole, 60 bis 100 mol-% 1,4-Butandiol sind.

Beim Copolyester c) addieren sich die Mengen aller Dicarbonsäuren zu 100 mol-% und die Mengen aller Diole zu 100 mol-%.

Der Copolyester c), der erfindungsgemäß dem Beschichtungssystem als Komponente c) zugesetzt wird, enthält somit mindestens zwei Dicarbonsäuren, von denen 30 bis 65 mol-% Terephthalsäure sind. Für den Fall, dass lediglich ein Diol eingesetzt wird, ist dies 1,4-Butandiol, jedoch können auch mehrere Diole verwendet werden. Die mindestens eine weitere Disäure, die neben Terephthalsäure zur Herstellung des Copolyesters c) verwendet wird, kann dabei eine beliebige Dicar bonsäure sein; bevorzugt ist es jedoch, wenn eine oder mehrere aliphatische oder aromatische Disäuren hierzu verwendet werden. Neben 1,4-Butandiol können noch ein oder mehrere weitere aliphatische oder aromatische Diole eingesetzt werden. Der erfindungsgemäße Copolyester c) enthält äquimolare, von Dicarbonsäuren bzw. Diolen abgeleitete Bestandteile. Ebenso ist jedoch eine Modifikation dahingehend denkbar, dass der Copolyester c) säure- oder hydroxyfunktionale Terminierung aufweist.

Bevorzugte Dicarbonsäuren, die neben Terephthalsäure im erfindungsgemäßen Copolyester c) enthalten sein können, sind dabei: aliphatische Dicarbonsäuren mit mindestens 6 C-Atomen, Isophthalsäure, Phthalsäure, Dimethylterephthalat (DMT), Dimethylisophthalat (DMI), Adipinsäure, Pimelinsäure, Korksäure, Azelainsäure, Sebazinsäure, Undecandisäure, Dodecandisäure, Brassylsäure, Dimersäure (36 C-Atome) und Dimersäure (44 C-Atome).

Für den Fall, dass neben 1,4-Butandiol weitere Diole enthalten sind, sind diese bevorzugt ausgewählt aus Monoethylenglykol, 1,2-Propandiol, 1,3-Propandiol, 1,5-Pentandiol, 1,6-Hexandiol, 1,7-Heptandiol, Diethylenglykol, Triethylenglykol, Tetraethylenglykol, Polyoxytetramethylenglykol und Polyethylenglykol.

Statt den Disäuren können zur Herstellung des erfindungsgemäßen Copolyesters ebenso Derivate wie Ester oder Anhydride eingesetzt werden; die dabei erhaltenen Copolyester sind jedoch in ihrer chemischen Natur identisch.

In einer weiteren Ausführungsform enthält die Disäurekomponente des Copolyesters c) 30 bis 65 mol-%, bevorzugt 40 bis 55 mol-%, besonders bevorzugt 40 bis 50 mol-% Terephthalsäure, 30 bis 60 mol-%, bevorzugt 30 bis 55 mol-%, besonders bevorzugt 30 bis 50 mol-% Isophthalsäure und 5 bis 25 mol-%, bevorzugt 5 bis 20 mol-%, besonders bevorzugt 10 bis 20 mol-% Dimersäure.

Unter den Dimersäuren ist die Dimersäure mit 36 C-Atomen bevorzugt.

In einer weiteren Ausführungsform enthält die Diolkomponente des Copolyesters c) 80 bis 100 mol-%, bevorzugt 90 bis 100 mol-% 1,4-Butandiol.

Weiter ist es bevorzugt, wenn der mindestens eine Polyester und/oder Copolyester des Bindemittels a) ein carboxylgruppen-terminierter Polyester und/oder Copolyester mit einer Glasübergangstemperatur von 30 bis 80 °C, einer Säurezahl von 15 bis 100 mg KOH/g, bevorzugt 20 bis 80 mg KOH/g, besonders bevorzugt 28 bis 38 mg KOH/g, ganz besonders bevorzugt 30 bis 36 mg KOH/g und einer OH-Zahl von maximal 10 mg KOH/g ist.

Als Bindemittel a) können sämtliche aus dem Stand der Technik hierfür bekannte und geeignete Polyester und/oder Copolyester eingesetzt werden. Insbesondere eignen sich hierfür carboxy-terminierte Polyester.

Die carboxy-terminierten Polyester sind aus dem Stand der Technik bekannt. Es handelt sich um das Produkt der Kondensationsreaktion von aliphatischen und/oder cycloaliphatischen Polyolen mit aliphatischen und/oder aromatischen Polycarbonsäuren. Die Polycarbonsäuren können auch durch deren Anhydride, Ester oder Chloride ersetzt sein. Beispiele für Polyole sind 1,2-Ethandiol, 1,3-Propandiol, 1,2-Propandiol, 1,4-Butandiol, 1,2-Butandiol, 1,3-Butandiol, 1,6-Hexandiol, 2,5-Hexandiol, 2,2-[Bis-(4-hydroxycyclohexyl)]propan, Neopentylglykol, Cyclohexandimethanol, Trimethylolpropan, Diethylenglykol, Dipropylenglykol und 2,2-Bis-[4-(2-hydroxy)]phenylpropan. Beispiele für Polycarbonsäuren sind Maleinsäure, Bernsteinsäure, Adipinsäure, Azelainsäure, Sebazinsäure, Decandicarbonsäure, Dodecandicarbonsäure, Terephthalsäure, Isophthalsäure, 1,2-Cyclohexandisäure, 1,4-Cyclohexandisäure, 4-Cyclohexen-1,2-Dicarbonsäure, Hexahydroendomethylenterephthalsäure, Hexachlorophthalsäure, Hydroxycarbonsäuren, Lactone und Trimellitsäure.

Meistens enthalten die Bindemittel mindestens 50 mol-% Terephthalsäure und/oder Isophthalsäure, bevorzugt 80 Mol-%. Bei den Polyolen der Polyester und/oder Copolyester der Bindemittel beträgt der Anteil an Neopentylglykol und/oder Propylenglykol mindestens 50 Mol-%. Sowohl die Mengen der Polycarbonsäuren, als auch die Mengen der Polyole ergänzen sich dabei jeweils zu 100 Mol-%.

Eine weitere vorteilhafte Ausführungsform sieht vor, dass der Vernetzer b) ausgewählt ist aus der Gruppe bestehend aus monomeren Epoxyverbindungen; Glycidylester von Polycarbonsäuren, insbesondere von Trimellithsäure oder Terephthalsäure; Glycidylether der Cyanursäure oder Isocyanursäure, beta-Hydroxyalkylamiden mit mindestens zwei Hydroxyalkylamidgruppen.

Insbesondere ist es vorteilhaft, wenn der Vernetzer b) ein polyfunktionelles beta-Hydroxyalkylamid der allgemeinen Formel (I) ist, 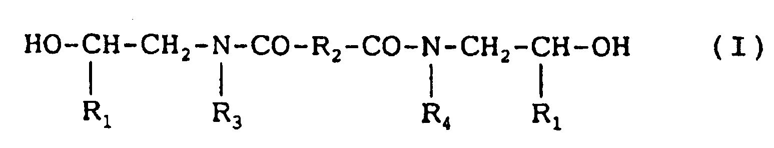 in der
- R1: gleiche oder verschiedene Alkylreste mit 1 bis 4 C-Atomen oder Wasserstoff,
- R2: ein aliphatischer, cycloaliphatischer, araliphatischer oder aromatischer Rest,
- R3 und R4: 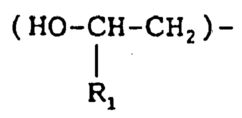
oder Wasserstoff oder gleiche oder unterschiedliche Alkylreste mit 1 bis 4 C-Atomen sind.

Weiter ist es bevorzugt, dass pro Carboxylgruppe, bezogen auf die Summe aller Carboxylgruppen des Bindemittels a) und des Copolyesters c), zwischen 0,5 und 1,5 beta-Hydroxyalkylamid-Gruppen des Vernetzers b) zur Verfügung stehen.

Das gegebenenfalls enthaltene mindestens eine Additiv d) ist dabei bevorzugt ausgewählt aus der Gruppe bestehend aus Pigmenten, Füllstoffen, Benetzungs-, Verlaufs- oder Entgasungsmittel, Hitze- oder UV-Stabilisatoren sowie Kombinationen oder Mischungen hiervon.

Erfindungsgemäß wird ebenso ein Verfahren zur Herstellung eines wärmehärtbaren Beschichtungssystems gemäß der vorliegenden Erfindung angegeben, bei dem
a) ein Bindemittel, enthaltend mindestens einen Polyester und/oder einen Copolyester
b) mindestens ein Vernetzer,
c) mindestens ein von Copolyester a) verschiedener Copolyester mit einem Schmelzpunkt von 80 bis 150 °C, gemessen nach ISO 11357, sowie gegebenenfalls
d) mindestens ein Additiv
   in der Schmelze bei 100 bis 170 °C gemischt, ausgetragen (z.B. über eine Kühlwalze), gegebenenfalls granuliert, gemahlen und auf eine Korngröße von kleiner als 100 µm, bevorzugt von kleiner als 90 µm, besonders bevorzugt von kleiner als 80 µm abgesiebt werden.

Geeignete Applikationsmethoden für die erfindungsgemäßen Pulverlacke sind z.B. das Flammspritzen, ladungsfreies Aufstreuen auf die zu beschichtenden Werkstoffe, Wirbelsintern und elektrostatisches Pulverspritzen.

Weiter wird erfindungsgemäß ein Verfahren zur Herstellung einer Schutzschicht aus einem erfindungsgemäßen Beschichtungssystem angegeben, bei dem die Beschichtungszusammensetzung auf eine Oberfläche eines zu beschichtenden Objektes aufgetragen wird, vorzugsweise durch Wirbelsintern und/oder elektrostatisches Beschichten, und anschließend thermisch ausgehärtet wird. Bevorzugt erfolgt die thermische Aushärtung bei 100 bis 250 °C, bevorzugt 150 bis 250 °C, besonders bevorzugt 170 bis 200 °C, während 5 bis 30 Minuten

Zudem stellt die vorliegende Erfindung eine Schutzschicht aus einer erfindungsgemäßen Beschichtungszusammensetzung bereit, die insbesondere gemäß dem zuvor beschriebenen Verfahren herstellbar ist.

Die vorliegende Erfindung wird anhand der nachfolgenden Ausführungen näher erläutert, ohne die Erfindung allerdings auf die dort dargestellten speziellen Parameter zu beschränken.

Zur Herstellung des Polyesters wird die aromatische Dicarbonsäure bzw. Dicarbonsäuremischung im Diol dispergiert und der Katalysator hinzugefügt, wobei das Diol im Überschuss von 5 bis 50 Mol-%, bevorzugt 10 bis 40 Mol-% eingesetzt wird. Die Veresterung erfolgt in einem Temperaturbereich von 200 bis 290 °C, bevorzugt 210 bis 250 °C, wobei langsam aufgeheizt und das Reaktionswasser abdestilliert wird.

Die anschließende Polykondensation wird in einem inertisieren Autoklaven unter Druck in einem Temperaturbereich von 170 bis 260 °C, bevorzugt 220 bis 250 °C durchgeführt. Nach Erreichen der gewünschten Viskosität wird der entstandene Polyester bei Temperaturen von 220 bis 250 °C ausgetragen, die erstarrte Schmelze zerbrochen, z.B. mittels einer Condux-Mühle und getrocknet.

Als Katalysatoren können Zinn- oder Titan-organische Verbindungen oder Salze der Metalle Mn, Zn, Ca oder Mg, z.B. mit niederen aliphatischen Carbonsäuren, wie Essigsäure, verwendet werden. Katalysatoren sind dem Fachmann in großer Zahl bekannt.

Für die Prüfung der rückseitigen Schlagzähigkeit bzw. die Durchführung des Dornbiegetests wurde ein kaltgewalztes Stahlblech (Q-panel R-36, Dicke 0,8 mm) einseitig beschichtet. Dazu wurde das Pulver elektrostatisch mit einer Gema Easy 1C Spritzpistole als eine 60 bis 70 µm dicke Schicht aufgetragen und 10 min bei 180 bis 200 °C eingebrannt.

Die nachfolgend durchgeführten Beispiele und Vergleichsbeispiele wurden dabei mit den folgenden Substanzen durchgeführt:
- Bindemittel B1:: Crylcoat 2630-2, Säurezahl 33, Cytec Surface Specialties SA/NV, Belgien
- Bindemittel B2:: Crylcoat 2441-2, Säurezahl 33, Cytec Surface Specialties SA/NV, Belgien
- Härter H1:: Primid XL-552 (beta-Hydroxyalkylamid) der EMS-CHEMIE AG, Schweiz
- Härter H2:: Triglycidylisocyanurat (TGIC)
- Entgasungsmittel:: Benzoin (2-Hydroxy-1,2-Diphenylethanon), Sigma-Aldrich GmbH, Schweiz
- Verlaufsmittel:: Resiflow PV 88, Worlée Chemie GmbH, Deutschland
- Pigment P1:: Kronos 2160 (Titandioxid), Kronos Titan GmbH, Deutschland
- Pigment P2:: Blanc fix super F (Bariumsulfat), Sachtleben Chemie GmbH, Deutschland
- Copolyester CP1:: 50 mol-% TPS, 37 mol-% IPS, 13 mol-% Dimersäure (36 C-Atome), 90 mol-% 1,4-Butandiol und 10 mol-% Ethylenglykol.
- Copolyester CP2:: 47 mol-% TPS, 46 mol-% IPS, 7 mol-% Adipinsäure und 100 mol-% 1,4-Butandiol.

Die Eigenschaften der Edukte bzw. des Beschichtungssystems wurden nach folgenden Normen gemessen:
Schmelzpunkt und Glasumwandlungstemperatur (Tg)
   ISO 11357
   Granulat
   Die Differential Scanning Calorimetry (DSC) wurde mit Aufheizrate von 20 K/min durchgeführt.
   Beim Schmelzpunkt wird die Temperatur am Peakmaximum, bei der Glasumwandlungstemperatur die Temperatur am Onset angegeben.
Shore Härte
   ISO 868
   ISO-Zugstab, Norm: ISO/CD 3167, Typ A1, 170 x 20/10 x 4 mm
   Temperatur 23 °C
   Gemessen wird am breiten Teil des Zugstabes. Shore A- und Shore D-Werte können aufgrund der verschiedenen Eindringkörper nicht miteinander korreliert werden.
Schmelzviskosität
   ISO 1133
   Granulat
   Temperatur 160 °C
   Belastung 2,16 kg
Säurezahl
   ISO 2114
   Granulat
   Zur Bestimmung der Säurezahl von Polyestern in mg KOH/g wird das Granulat durch Rückflusskochen in einem Phenol/Chloroform-Gemisch (40/60 Gew.-%) gelöst. Nach dem Abkühlen auf Raumtemperatur wird mit einer Tetra-n-butylammoniumhydroxyd-Lösung (0,1 mol/l in 2-Propanol/Methanol) titriert, wobei eine Tetrabromphenolblau-Lösung (0,1 Gew.-% in Ethanol) als Indikator verwendet wird.
Hydroxylzahl (OH-Zahl)
   ISO 4629
   gebrochene Schmelze
   Die OH-Gruppen werden mit Essigsäureanhydrid in Anwesenheit von Toluol-4-sulfonsäure acetyliert. Der Überschuss an Anhydrid wird als Esssigsäure über eine Rücktitration mit Kaliumhydroxid bestimmt.
Rückseitige Schlagzähigkeit (Reverse-Impact)
   ASTM D 2794
   Einseitig beschichtetes Stahlblech (Q-panel R-36, Dicke 0,8 mm)
   Kugeldurchmesser des Schlagbolzens 5/8 inch Schlaggewicht 4 pound
   Temperatur 23 °C
   Das beschichtete Stahlblech (Beschichtungsdicke 60-70 µm) wird nach dem Einbrennen zwischen 1 und 12 Stunden bei 23 °C gelagert. Anschließend lässt man den Schlagbolzen des Kugelschlagprüfers auf die unbeschichtete Rückseite des Prüfblechs fallen. Angegeben wird die Energie in inch*pound (inch*pd), bei der der Lackfilm an der erzeugten Verformung bei der optischen Beurteilung mit einer Lupe (Vergrößerung 10-fach) noch keine Risse aufweist. Dabei gilt 1 inch*pd = 0,01152 kg*m.
Dornbiegetest (Conical Mandril)
   ASTM D 522
   Einseitig beschichtetes Stahlblech (Q-panel R-36, Dicke 0,8 mm)
   Konischer Dorn mit Durchmessern von 3 mm bis 38 mm Temperatur 23 °C
   Das beschichtete Stahlblech (Beschichtungsdicke 60-70 µm) wird nach dem Einbrennen zwischen 1 und 12 Stunden bei 23 °C gelagert. Das Prüfblech wird in das Gerät eingespannt und mit dem Biegearm in ca. 1 s um den konischen Dorn bis zu einem Winkel von 135° gebogen. Angegeben wird der Durchmesser des Dorns in mm, bei dem der Lackfilm an der erzeugten Biegung bei der optischen Beurteilung mit einer Lupe (Vergrößerung 10-fach) noch keine Risse aufweist.

Die Eigenschaften der Copolyester CP1 und CP2 sind nachfolgend in Tabelle 1 gegenübergestellt.

**Tabelle 1**

| | | **CoPES CP1** | **CoPES CP2** |
|---|---|---|---|
| Schmelzpunkt | °C | 115 | 120 |
| | | | |
| Glasübergangs-temperatur | °C | -11 | 19 |
| | | | |
| Schmelzviskosität 160° C/2.16kg | Pa*s | 300 | 320 |
| | | | |
| Shore D | | 30 | 60 |

Aus den oben genannten Verbindungen wurden in Form von Vergleichsbeispielen und Beispielen verschiedene Beschichtungssysteme hergestellt. Es ist ersichtlich, dass sich die mechanischen Eigenschaften bei Beschichtungen aus den erfindungsgemäßen Zusammensetzungen in Langzeittests wesentlich verbessern: Erzeugte Schutzschichten aus den Zusammensetzungen, die die erfindungsgemäßen Copolyester enthalten, weisen beispielsweise eine weitaus höhere rückseitige Schlagzähigkeit auf, verglichen mit Beschichtungen aus Zusammensetzungen, die entweder keinen zusätzlich Copolyester (Vergleichsbeispiel 1 und 4) bzw. andere, nicht unter die Definition der vorliegenden Erfindung fallenden Copolyester (Vergleichsbeispiel 2) beinhalten. Auch im Dornbiegetest konnte nach längerer Standzeit eine deutliche Verbesserung der dort gemessenen Eigenschaften beobachtet werden.

**Tabelle 2**

| **Komponenten** | **Ein-heit** | **Vergleichs-beispiel 1** | **Vergleichs-beispiel 2** | **Beispiel 3** | **Vergleichs-beispiel 4** | **Beispiel 5** |
|---|---|---|---|---|---|---|
| Bindemittel B1 | g | 503,3 | 484,5 | 484,5 | - | - |
| Bindemittel B2 | g | - | - | - | 491 | 472,4 |
| Härter H1 | g | 26,7 | 25,5 | 25,5 | - | - |
| Härter H2 | g | - | - | - | 37 | 35,6 |
| Entgasungsmittel | g | 2 | 2 | 2 | 2 | 2 |
| Verlaufsmittel | g | 8 | 8 | 8 | 10 | 10 |
| Pigment P1 | g | 300 | 300 | 300 | 300 | 300 |
| Pigment P2 | g | 160 | 160 | 160 | 160 | 160 |
| CoPES CP1 | g | - | - | 20 | - | 20 |
| CoPES CP2 | g | - | 20 | - | - | - |
| Gesamtmenge | g | 1000 | 1000 | 1000 | 1000 | 1000 |
| **Tests** | | | | | | |
| Rückseitige Schlag-zähigkeit nach Pro-duktion | in*lb | 160 | 160 | 160 | 160 | 160 |
| 1 Monat | | 60 | 70 | 140 | 80 | 140 |
| 3 Monate | | 10 | 30 | 100 | 30 | 120 |
| Dornbiegetest nach Produktion | mm | 3.7 | 3.7 | 3.7 | 3.7 | 3.7 |
| 1 Monat | | 5.4 | 5.4 | 3.7 | 5.4 | 3.7 |
| 3 Monate | | 7.1 | 5.4 | 3.7 | 5.4 | 3.7 |

Wie aus den erfindungsgemäßen Beispielen ersichtlich ist, weisen die Schutzschichten, die aus dem erfindungsgemäßen Beschichtungssystem bzw. den Pulverlackzusammensetzungen hergestellt wurden, eine erheblich verbesserte mechanische Beständigkeit auf.

## Patentansprüche

1. Wärmehärtbares Beschichtungssystem, enthaltend
a) ein Bindemittel, enthaltend mindestens einen Polyester und/oder einen Copolyester
b) mindestens einen Vernetzer,
c) mindestens einen von Copolyester a) verschiedenen Copolyester, sowie gegebenenfalls
d) mindestens ein Additiv,
**dadurch gekennzeichnet, dass** der Copolyester c) ein Polykondensat mindestens zweier Dicarbonsäuren und mindestens eines Diols darstellt, wobei, bezogen auf die Gesamtheit aller Dicarbonsäuren, 30 bis 65 mol-% Terephthalsäure sind und, bezogen auf die Gesamtheit aller Diole, 60 bis 100 mol-% 1,4-Butandiol sind und der Copolyester c) die nachfolgenden Bedingungen erfüllt:
einen Schmelzpunkt von 100 bis 130 °C, gemessen nach ISO 11357,
eine Glasübergangstemperatur von -40 bis 10 °C, gemessen nach ISO 11357 und
eine Schmelzviskosität von 200 bis 400 Pa·s, gemessen bei 160 °C und 2,16 kg nach ISO 1133, und
eine Shorehärte D von 20 bis 45, gemessen nach ISO 868.

2. Beschichtungssystem nach Anspruch 1, **dadurch gekennzeichnet, dass** der Copolyester c) die nachfolgenden Bedingungen erfüllt:
a) einen Schmelzpunkt von 110 bis 120 °C gemessen nach ISO 11357,
b) eine Glasübergangstemperatur von -30 bis 0 °C, bevorzugt -20 bis -10 °C, besonders bevorzugt -15 bis -10 °C, gemessen nach ISO 11357 und
c) eine Schmelzviskosität von 250 bis 350 Pa·s, bevorzugt 280 bis 320 Pa·s, gemessen bei 160 °C und 2,16 kg nach ISO 1133, und
d) eine Shorehärte D von 20 bis 40, bevorzugt von 25 bis 35, gemessen nach ISO 868.

3. Beschichtungssystem nach einem der vorhergehenden Ansprüche, **dadurch gekennzeichnet, dass**, bezogen auf die Gesamtzusammensetzung, der mindestens eine Copolyester c) zu 0,1 bis 13 Gew.-%, bevorzugt zu 0,5 bis 11 Gew.-%, besonders bevorzugt 1 bis 9 Gew.-%, ganz besonders bevorzugt 2 bis 7 Gew.-% enthalten ist.

4. Beschichtungssystem nach einem der vorhergehenden Ansprüche, **dadurch gekennzeichnet, dass** der mindestens eine Polyester und/oder Copolyester des Bindemittels a) ein carboxylgruppen-terminierter Polyester und/oder Copolyester mit einer Glasübergangstemperatur von 30 bis 80 °C, einer Säurezahl von 15 bis 100 mg KOH/g, bevorzugt 20 bis 80 mg KOH/g, besonders bevorzugt 28 bis 38 mg KOH/g, ganz besonders bevorzugt 30 bis 36 mg KOH/g und einer OH-Zahl von maximal 10 mg KOH/g ist.

5. Beschichtungssystem nach einem der vorhergehenden Ansprüche, **dadurch gekennzeichnet, dass** der Vernetzer b) ausgewählt ist aus der Gruppe bestehend aus monomeren Epoxyverbindungen; Glycidylester von Polycarbonsäuren, insbesondere von Trimellithsäure oder Terephthalsäure; Glycidylether der Cyanursäure oder Isocyanursäure, beta-Hydroxyalkylamiden mit mindestens zwei Hydroxyalkylamidgruppen.

6. Beschichtungssystem nach einem der vorhergehenden Ansprüche, **dadurch gekennzeichnet, dass** der Vernetzer b) ein polyfunktionelles beta-Hydroxyalkylamid der allgemeinen Formel (I) ist, 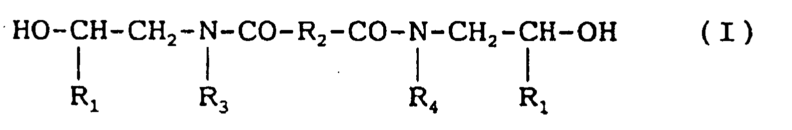 R1 gleiche oder verschiedene Alkylreste mit 1 bis 4 C-Atomen oder Wasserstoff,
R2 ein aliphatischer, cycloaliphatischer, araliphatischer oder aromatischer Rest, R3 und R4 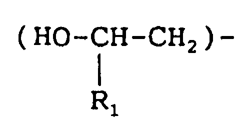 oder Wasserstoff oder gleiche oder unterschiedliche Alkylreste mit 1 bis 4 C-Atomen sind.

7. Beschichtungssystem nach einem der Ansprüche 5 bis 6, **dadurch gekennzeichnet, dass** pro Carboxylgruppe, bezogen auf die Summe aller Carboxylgruppen des Bindemittelharzes a) und des Copolyesters c), zwischen 0,5 und 1,5 beta-Hydroxyalkylamid-Gruppen des Vernetzers b) zur Verfügung stehen.

8. Beschichtungssystem nach einem der vorhergehenden Ansprüche, **dadurch gekennzeichnet, dass** das mindestens eine Additiv ausgewählt ist aus der Gruppe bestehend aus Pigmenten, Füllstoffen, Benetzungs-, Verlaufs- oder Entgasungsmittel, Hitze- oder UV-Stabilisatoren sowie Kombinationen oder Mischungen hiervon.

9. Verfahren zur Herstellung eines Beschichtungssystems nach einem der vorhergehenden Ansprüche, bei dem
a) ein Bindemittel, enthaltend mindestens einen Polyester und/oder einen Copolyester
b) mindestens ein Vernetzer,
c) mindestens ein von Copolyester a) verschiedener Copolyester mit einem Schmelzpunkt von100 bis 130 °C, gemessen nach ISO 11357, sowie gegebenenfalls
d) mindestens ein Additiv
in der Schmelze bei 100 bis 170 °C gemischt, ausgetragen, gemahlen und auf eine Korngröße von kleiner als 100 µm, bevorzugt von kleiner als 90 µm, besonders bevorzugt von kleiner als 80 µm abgesiebt werden.

10. Verfahren zur Herstellung einer Schutzschicht aus einem Beschichtungssystem nach einem der Ansprüche 1 bis 8, bei dem die Beschichtungszusammensetzung auf eine Oberfläche eines zu beschichtenden Objektes aufgetragen wird, vorzugsweise durch Wirbelsintern und/oder elektrostatisches Beschichten, und anschließend thermisch ausgehärtet wird.

11. Schutzschicht, herstellbar nach dem Verfahren nach vorhergehendem Anspruch.

## Claims

1. Heat-curable coating system, containing
a) a binding agent containing at least one polyester and/or one copolyester,
b) at least one crosslinking agent,
c) at least one copolyester that is different from copolyester a) and, optionally,
d) at least one additive,
**characterised in that** the copolyester c) represents a polycondensate of at least two dicarboxylic acids and at least one diol, wherein, relative to the total of all the dicarboxylic acids, 30 to 65 mol.% are terephthalic acid and, relative to the total of all the diols, 60 to 100 mol.% are 1,4-butanediol and the copolyester c) fulfils the following conditions:
a melting point of 100 to 130°C, measured according to ISO 11357,
a glass transition temperature of -40 to 10°C, measured according to ISO 11357 and
a melt viscosity of 200 to 400 Pa•s, measured at 160°C and 2.16kg according to ISO 1133, and
a Shore hardness D of 20 to 45, measured according to ISO 868.

2. Coating system according to claim 1, **characterised in that** the copolyester c) fulfils the following conditions:
a) a melting point of 110 to 120°C, measured according to ISO 11357,
b) a glass transition temperature of -30 to 0°C , preferably -20 to -10°C, particularly preferably -15 to -10°C, measured according to ISO 11357 and
c) a melt viscosity of 250 to 350 Pa•s, preferably 280 to 320 Pa•s, measured at 160°C and 2.16kg according to ISO 1133, and
d) a Shore hardness D of 20 to 40, preferably 25 to 35, measured according to ISO 868.

3. Coating system according to one of the preceding claims, **characterised in that**, relative to the total composition, the at least one copolyester c) is contained at 0.1 to 13% b.w., preferably at 0.5 to 11% b.w., particularly preferably 1 to 9% b.w., and with utmost preference for 2 to 7% b.w.

4. Coating system according to one of the preceding claims, **characterised in that** the at least one polyester and/or copolyester of the binding agent a) is a carboxyl group-terminated polyester and/or copolyester having a glass transition temperature of 30 to 80°C, an acid number of 15 to 100mg KOH/g, preferably 20 to 80mg KOH/g, particularly preferably 28 to 38 mg KOH/g, with utmost preference for 30 to 36mg KOH/g, and an OH number of 10mg KOH/g maximum.

5. Coating system according to one of the preceding claims, **characterised in that** the crosslinking agent b) is selected from the group consisting of monomeric epoxy compounds; glycidyl esters of polycarboxylic acids, in particular trimellitic acid or terephthalic acid; glycidyl ethers of cyanuric acid or isocyanuric acid, beta-hydroxyalkyl amides having at least two hydroxyalkyl amide groups.

6. Coating system according to one of the preceding claims, **characterised in that** the crosslinking agent b) is a polyfunctional beta-hydroxyalkyl amide of the general formula (I), 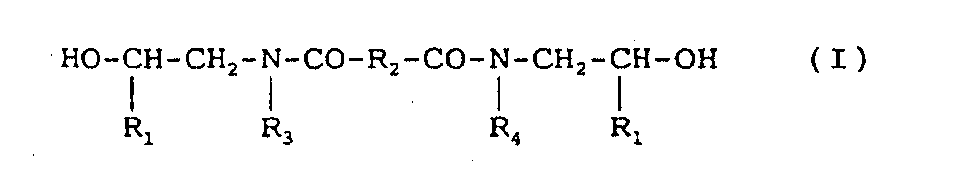 where,
R1 = the same or different alkyl radicals having 1 to 4 carbon atoms or hydrogen,
R2 = an aliphatic, cycloaliphatic, araliphatic or aromatic radical,
R3 and R4 = 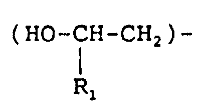 or hydrogen or the same or different alkyl radicals having 1 to 4 carbon atoms.

7. Coating system according to one of claims 5 to 6, **characterised in that**, relative to the sum of all carboxyl groups of the binding agent resin a) and the copolyester c), between 0.5 and 1.5 beta-hydroxyalkyl amide groups of the crosslinking agent b) are available per carboxyl group.

8. Coating system according to one of the preceding claims, **characterised in that** the at least one additive is selected from the group consisting of pigments, fillers, wetting agents, levelling agents or degasification agents, heat or UV stabilisers and combinations or mixtures thereof.

9. Method for the production of a coating system according to one of the preceding claims, in which
a) a binding agent containing at least one polyester and/or one copolyester,
b) at least one crosslinking agent,
c) at least one copolyester that is different from copolyester a) having a melting point of 100 to 130°C, measured according to ISO 11357 and, optionally,
d) at least one additive,
are mixed in the melting process at 100 to 170°C, are ground and are sieved to a grain size of smaller than 100µm, preferably smaller than 90µm, particularly preferably smaller than 80µm.

10. Method for the production of a protective layer made from a coating system according to one of claims 1 to 8, in which the coating composition is applied to a surface of an object that is to be coated, preferably by whirl sintering and/or electrostatic coating, and is then cured thermally.

11. Protective layer able to be produced according to the method according to the preceding claim.

## Revendications

1. Système de revêtement thermodurcissable, contenant
a) un liant, contenant au moins un polyester et/ou un copolyester,
b) au moins un agent de réticulation,
c) au moins un copolyester différent du copolyester a), ainsi que, éventuellement,
d) au moins un additif,
**caractérisé en ce que** le copolyester c) est un produit de polycondensation d'au moins deux acides dicarboxyliques et d'au moins un diol, 30 à 65 % en moles de l'ensemble de tous les acides dicarboxyliques étant constitués d'acide téréphtalique, et 60 à 100 % en moles de l'ensemble de tous les diols étant constitués de 1,4-butanediol, et le copolyester c) satisfaisant aux conditions suivantes :
un point de fusion allant de 100 à 130°C, mesuré selon ISO 11357 ;
une température de transition vitreuse allant de -40 à 10°C, mesurée selon ISO 11357 ; et
une viscosité à l'état fondu allant de 200 à 400 Pa.s, mesurée à 160°C sous 2,16 kg selon ISO 1133 ; et
une dureté Shore D de 20 à 45, mesurée selon ISO 868.

2. Système de revêtement selon la revendication 1, **caractérisé en ce que** le copolyester c) satisfait aux conditions suivantes :
a) un point de fusion allant de 110 à 120°C, mesuré selon ISO 11357 ;
b) une température de transition vitreuse allant de -30 à 0°C, de préférence de -20 à -10°C, d'une manière particulièrement préférée de -15 à -10°C, mesurée selon ISO 11357 ; et
c) une viscosité à l'état fondu de 250 à 350 Pa.s, de préférence de 280 à 320 Pa.s, mesurée à 160°C et sous 2,16 kg selon ISO 1133 ; et
d) une dureté Shore D allant de 20 à 40, de préférence de 25 à 35, mesurée selon ISO 868.

3. Système de revêtement selon l'une des revendications précédentes, **caractérisé en ce que**, par rapport à la totalité de la composition, le ou les copolyesters c) sont présents en une quantité de 0,1 à 13 % en poids, de préférence de 0,5 à 11 % en poids, d'une manière particulièrement préférée de 1 à 9 % en poids, d'une manière tout particulièrement préférée de 2 à 7 % en poids.

4. Système de revêtement selon l'une des revendications précédentes, **caractérisé en ce que** le ou les polyesters et/ou copolyesters du liant a) sont chacun un polyester et/ou un copolyester à terminaison carboxyle, ayant une température de transition vitreuse allant de 30 à 80°C, un indice d'acide de 15 à 100 mg KOH/g, de préférence de 20 à 80 mg KOH/g, d'une manière particulièrement préférée de 28 à 38 mg KOH/g, d'une manière tout particulièrement préférée de 30 à 36 mg KOH/g, et un indice d'OH au maximum de 10 mg KOH/g.

5. Système de revêtement selon l'une des revendications précédentes, **caractérisé en ce que** l'agent de réticulation b) est choisi dans le groupe consistant en les composés époxy monomères ; les esters glycidyliques d'acides polycarboxyliques, en particulier de l'acide trimellitique ou de l'acide téréphtalique ; les éthers glycidyliques de l'acide cyanurique ou de l'acide isocyanurique, les bêta-hydroxyalkylamides ayant au moins deux groupes hydroxyalkylamide.

6. Système de revêtement selon l'une des revendications précédentes, **caractérisé en ce que** l'agent de réticulation b) est un bêta-hydroxyalkylamide polyfonctionnel de formule générale (I) 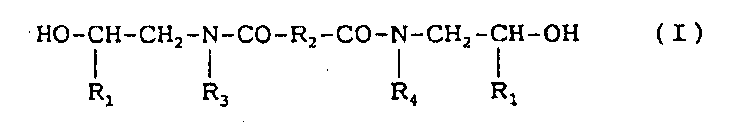 R1 représente des radicaux alkyle identiques ou différents ayant 1 à 4 atomes de carbone ou des atomes d'hydrogène,
R2 est un radical aliphatique, cycloaliphatique, araliphatique ou aromatique,
R3 et R4 sont chacun 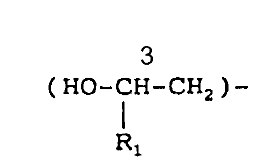 ou un atome d'hydrogène, ou représentent des radicaux alkyle identiques ou différents ayant 1 à 4 atomes de carbone.

7. Système de revêtement selon l'une des revendications 5 à 6, **caractérisé en ce que**, par groupes carboxyle, et par rapport à la somme de l'ensemble des groupes carboxyle de la résine liante a) et du copolyester c), on dispose de 0,5 à 1,5 groupes bêta-hydroxyalkylamide de l'agent de réticulation b).

8. Système de revêtement selon l'une des revendications précédentes, **caractérisé en ce que** le ou les additifs sont choisis dans le groupe consistant en les pigments, les charges, les agents mouillants, les agents d'étalement ou les agents de dégazage, les thermostabilisants ou stabilisants UV, ainsi que les combinaisons ou mélanges de ceux-ci.

9. Procédé de fabrication d'un système de revêtement selon l'une des revendications précédentes, dans lequel on mélange à l'état fondu à une température allant de 100 à 170°C
a) un liant contenant au moins un polyester et/ou un copolyester,
b) au moins un agent de réticulation,
c) au moins un copolyester différent du copolyester a), ayant un point de fusion allant de 100 à 130°C, mesuré selon ISO 11357, ainsi que, éventuellement,
d) au moins un additif,
on décharge, on broie et on tamise jusqu'à une granulométrie inférieure à 100 µm, de préférence inférieure à 90 µm, d'une manière particulièrement préférée inférieure à 80 µm.

10. Procédé de fabrication d'une couche de protection constituée d'un système de revêtement selon l'une des revendications 1 à 8, dans lequel la composition de revêtement est appliquée sur une surface d'un objet à revêtir, de préférence par frittage en lit fluidisé et/ou par revêtement électrostatique, puis est soumis à un durcissement thermique.

11. Couche de protection pouvant être fabriquée par le procédé selon la revendication précédente.
